(19) Europäisches Patentamt
European Patent Office
Office européen des brevets

(11) **EP 3 444 132 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(51) Int Cl.:
***B60C 23/04*** *(2006.01)*      ***B60W 40/12*** *(2012.01)*

(21) Anmeldenummer: **18184193.3**

(22) Anmeldetag: **18.07.2018**

(54) **VERFAHREN ZUR ERMITTLUNG EINES RADUMFANGS EINES ANTRIEBSRADS, STEUERUNGSVERFAHREN FÜR EINEN ANTRIEBSMOTOR, STEUERGERÄT UND FAHRZEUG**

METHOD FOR DETERMINING A WHEEL CIRCUMFERENCE OF A DRIVE WHEEL, CONTROL METHOD FOR A DRIVE MOTOR, CONTROLLER APPARATUS AND AUTOMOBILE

PROCÉDÉ DE DÉTERMINATION D'UNE CIRCONFÉRENCE DE ROUE D'UNE ROUE D'ENTRAÎNEMENT, PROCÉDÉ DE COMMANDE D'UN MOTEUR D'ENTRAÎNEMENT, APPAREIL DE COMMANDE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2017 DE 102017214294**

(43) Veröffentlichungstag der Anmeldung:
**20.02.2019 Patentblatt 2019/08**

(73) Patentinhaber: **Robert Bosch GmbH**
**70442 Stuttgart (DE)**

(72) Erfinder:
• **Stegmaier, Juergen**
**72074 Tuebingen (DE)**
• **Greiner, Rinaldo**
**72762 Reutlingen (DE)**

(56) Entgegenhaltungen:
WO-A1-2007/074048      DE-A1-102010 000 867
DE-A1-102012 201 881      DE-A1-102016 006 869

EP 3 444 132 B1

**Beschreibung**

Die vorliegende Erfindung betrifft ein Verfahren zur Ermittlung eines Radumfangs eines Antriebsrads und ein Steuerungsverfahren für einen Antriebsmotor sowie ein Steuergerät zur Durchführung der Verfahren und ein Fahrzeug mit dem Steuergerät.

Stand der Technik

Die Schrift DE 10 2012 201 881 A1 offenbart eine Steuerungsanordnung für ein Elektrofahrrad mit einen Beschleunigungssensor zur Anfahrerkennung.

In der Schrift EP 1 213 561 A1 ist eine Bestimmung des Neigungswinkels einer Fahrtstrecke in Abhängigkeit einer erfassten Beschleunigung sowie einer erfassten Raddrehzahl offenbart.

Dokument DE102010000867A1 wird als der nächste Stand der Technik betrachtet und offenbart ein Verfahren zur Ermittlung eines Radumfangs eines Antriebsrads eines Fahrzeugs, wobei der Radumfang in Abhängigkeit der erfassten Drehzahl und der ermittelten Strecke bestimmt wird.

Die Berechnung der Geschwindigkeit bei Fahrradcomputern oder eBike-Systemen bzw. Elektrofahrrädern erfordert i.d.R. die Kenntnis des Radumfangs. Bei Fahrradcomputern muss der Radumfang vom Kunden vermessen oder ein Literaturwert für das jeweilige Reifenmodell in Erfahrung gebracht und einprogrammiert werden. Bei einem Elektrofahrrad wird der Radumfang oft vom Fahrradhersteller fest einprogrammiert und kann vom Endkunden nicht angepasst werden, da der Radumfang einen entscheidenden Einfluss auf die häufig gesetzliche Abregelgeschwindigkeit des Elektrofahrrads hat. Beim Umrüsten des Reifens, beispielsweise von Straßenbereifung auf Stollenreifen, kann sich der Radumfang allerdings ändern. Wird der Radumfang des eBike-Systems nicht entsprechend der Änderung angepasst, kommt es zu Ungenauigkeiten in der Geschwindigkeitsberechnung und weiterer Tacho-Funktionen. Außerdem kann es aufgrund einer Änderung des Reifenumfangs zu Leistungseinbußen des Elektrofahrrads kommen, beispielsweise erreicht das Elektrofahrrad mit Motorunterstützung nicht mehr die im Auslieferungszustand erreichte Geschwindigkeit.

Die Aufgabe der vorliegenden Erfindung ist es, den Radumfang automatisch zu bestimmen.

Offenbarung der Erfindung

Die vorliegende Erfindung betrifft ein Verfahren zur Ermittlung eines Radumfangs eines Antriebsrads eines Fahrzeugs. Während einer vorgegebenen Zeitspanne erfolgt die Erfassung einer Drehzahl des Antriebsrads und die Erfassung einer Beschleunigung bzw. des Beschleunigungsverlaufs des Fahrzeugs in Richtung der Längsachse des Fahrzeugs. Anschließend wird eine gefahrene Strecke des Fahrzeugs in Abhängigkeit der während der Zeitspanne erfassten Beschleunigung bzw. des Beschleunigungsverlaufs ermittelt. In einem abschließenden Schritt wird der Radumfangs des Antriebsrads in Abhängigkeit der erfassten Drehzahl und der gefahrenen Strecke bestimmt. Das Verfahren weist den Vorteil auf, dass der tatsächliche Radumfang automatisiert bestimmt wird. Dadurch bleibt die Genauigkeit verschiedener Tachofunktionen trotz eines Reifenwechsels mit verändertem Radumfang erhalten, beispielsweise sind die Tachofunktionen die aktuelle Geschwindigkeit des Fahrzeugs und/oder die auf einer Reise mit dem Fahrzeug gefahrenen Streckenkilometer. Das Verfahren weist außerdem den Vorteil auf, dass der Programmierprozesses des Tachos zum aktuellen Reifenumfang bei einem Reifenwechsel oder nach dem Kauf des Tachos entfällt. Dadurch resultiert des Weiteren der Vorteil, dass eine Fehlerquelle durch Falschprogrammierung vermieden wird.

Erfindungsgemäss erfolgt vor der vorgegebenen Zeitspanne zur Erfassung einer Drehzahl und zur Erfassung der Beschleunigung eine Kalibrierung eines Beschleunigungssensorsignals. Die Kalibrierung wird im Stillstand des Fahrzeugs durchgeführt. In dem Schritt der Kalibrierung wird ein Beschleunigungs-Offset in Richtung der Längsachse des Fahrzeugs in Abhängigkeit einer erfassten Beschleunigung bestimmt. Durch die Kalibrierung wird die Bestimmung des Radumfangs vorteilhafterweise genauer.

Die Erfindung betrifft auch ein Steuerungsverfahren für einen Antriebsmotor des Fahrzeugs. Das Steuerungsverfahren erfasst einen Radumfang, beispielsweise wird der Radumfang aus einem elektrischen Speicher erfasst, wobei der Radumfang vorzugsweise durch das Verfahren zur Ermittlung des Radumfangs des Antriebsrads des Fahrzeugs bestimmt wurde. Anschließend erfolgt die Ansteuerung des Antriebsmotors in Abhängigkeit des erfassten Radumfangs. Durch das Verfahren kann vorteilhafterweise eine Antriebseinheit mit dem Antriebsmotor an verschiedene Rahmengeometrien von beispielsweise Elektrofahrrädern montiert werden, wobei die Genauigkeit der Abregelgeschwindigkeit und verschiedener Tachofunktionen der Elektrofahrräder trotz unterschiedlicher Radumfänge erhalten bleibt und/oder der Aufwand für den Radhersteller zur Einstellung des Steuergerätes zur Durchführung des Verfahrens reduziert wird. Dadurch wird außerdem für einen Hersteller eines Elektrofahrrads ein möglicher Fehler der falschen Radumfangsprogrammierung in ein Steuergerät des Elektrofahrrads vermieden.

Die Erfindung betrifft auch ein Steuergerät für das Fahrzeug. Das Steuergerät erfasst während der vorgegebenen Zeitspanne mittels eines Drehzahlsensors eine Drehzahl eines Antriebsrads des Fahrzeug und mittels eines Beschleunigungssensors eine Beschleunigung des Fahrzeugs in Richtung der Längsachse des Fahrzeugs. Anschließend ermittelt das Steuergerät mittels einer Recheneinheit die während der Zeitspanne gefahrene Strecke des Fahrzeugs in Abhängigkeit der erfassten Beschleunigung. Das Steuergerät ist des Weiteren mittels der Recheneinheit dazu eingerichtet, einen Radumfang des Antriebsrads des Fahrzeugs in Abhängigkeit der erfassten Drehzahl und der ermittelten Strecke zu bestimmen. Das Steuergerät kann demnach vorteilhafterweise die erfindungsgemäßen Verfahren durchführen beziehungsweise automatisiert einen aktuellen Radumfang bestimmen. Dadurch werden beispielsweise auch geringfügige Reifenumfangsänderungen z.B. durch geringen Luftdruck im Reifen oder ein abgefahrenes Reifenprofil erfasst und somit die Genauigkeit der Tachofunktionen erhöht.

Erfindungsgemäss ist die Recheneinheit des Steuergeräts dazu eingerichtet, vor der vorgegebenen Zeitspanne im Stillstand des Fahrzeugs eine Kalibrierung eines Beschleunigungssensorsignals des Beschleunigungssensors durchzuführen. Durch die Kalibrierung wird ein Beschleunigungs-Offset in Richtung der Längsachse des Fahrzeugs in Abhängigkeit einer erfassten Beschleunigung in Richtung der Längsachse des Fahrzeugs bestimmt. Anschließend ist die Recheneinheit dazu eingerichtet, den Radumfang zusätzlich in Abhängigkeit des bestimmten Beschleunigung-Offsets zu ermitteln.

Erfindungsgemäss ist das Steuergerät dazu eingerichtet, ein Ausgangssignal zur Ansteuerung des Antriebsmotors des Fahrzeugs in Abhängigkeit des bestimmten Radumfangs zu erzeugen.

Die Erfindung betrifft auch ein Elektrofahrrad, mit einem erfindungsgemäßen Steuergerät.

Die vorliegende Erfindung wird nachfolgend anhand bevorzugter Ausführungsformen und beigefügter Zeichnungen erläutert.

Figur 1: Elektrofahrrad
Figur 2a: Verfahren zur Ermittlung eines Radumfangs
Figur 2b: Steuerungsverfahren für einen Antriebsmotor
Figur 3: Steuergerät

Ausführungsbeispiele

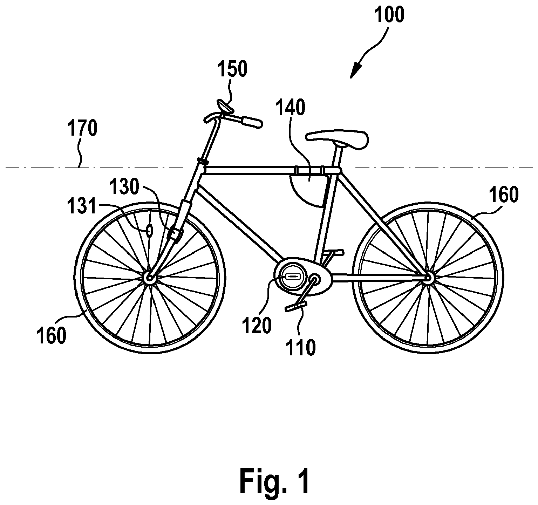

In Figur 1 ist ein Elektrofahrrad 100 als Fahrzeug dargestellt. Das Elektrofahrrad 100 weist Pedale 110 und einen Antriebsmotor 120, insbesondere einen Elektromotor, zum Antrieb des Elektrofahrrads 100 auf. Das Elektrofahrrad 100 umfasst ferner einen Drehzahlsensor 130. Der Drehzahlsensor 130 ist beispielsweise ein Reed-Sensor, welcher eine Drehzahl beziehungsweise eine Umdrehungsanzahl eines an den Speichen eines Antriebsrades 160 des Elektrofahrrads 100 angeordneten Magneten 131 erfasst. Das Elektrofahrrad 100 weist ferner einen Beschleunigungssensor 140 auf. Der Beschleunigungssensor 140 ist beispielsweise am Rahmen des Elektrofahrrads 100 und/oder in einem Steuergerät 150 angeordnet. Der Beschleunigungssensor 140 erfasst eine Beschleunigung des Elektrofahrrads 100 in Richtung der Längsachse 170 des Elektrofahrrads 100, d.h. beispielsweise in Vorwärtsfahrtrichtung des Elektrofahrrads 100. Das Steuergerät 150 ist ebenfalls am Elektrofahrrad 100 angeordnet. Der Antriebsmotor 120 des Elektrofahrrads 100 wird bevorzugt durch das Steuergerät 150 in Abhängigkeit einer Trittgröße eines Radfahrers des Elektrofahrrads 100 auf ein Pedal 110 angesteuert. Bei der Ansteuerung des Elektromotors 120 ist beispielsweise eine gesetzlich vorgegebene Abregelgeschwindigkeit beziehungsweise eine Maximalgeschwindigkeit von 25 km/h vorgesehen. Im Normalbetrieb wird beispielsweise die Geschwindigkeit des Elektrofahrrads 100 in Abhängigkeit der Drehzahl n und des Radumfangs U des Antriebsrads 160 erfasst. Nach dem Stand der Technik wird deswegen der Radumfang U durch den Hersteller eines Elektrofahrrads 100 in dem Steuergerät 150 einprogrammiert und ist folglich in einem Speicher des Steuergeräts 150 gespeichert. Demnach erfolgt im Stand der Technik keine automatisierte Anpassung des gespeicherten Radumfangs U bei einem platten Reifen und/oder einem Austausch des Reifens beziehungsweise der Radfelge des Rads 160. Folglich weisen im Stand der Technik beispielsweise die Tachofunktionen sowie die Abregelgeschwindigkeit eine kleine Ungenauigkeit auf. Außerdem ist das Einprogrammieren des Radumfangs U nach dem Stand der Technik fehleranfällig und aufwendig für den Hersteller des Elektrofahrrads 100.

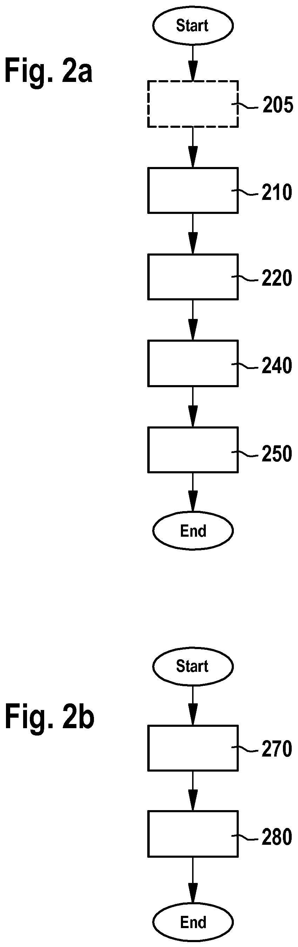

In Figur 2 ist ein Ablaufdiagramm des Verfahrens zur Ermittlung des Radumfangs U eines Antriebsrades 160 eines Fahrzeuges 100 dargestellt, wobei das Fahrzeug 100 insbesondere ein Elektrofahrrad gemäß Figur 1 ist. Das Verfahren kann eine optionale Kalibrierung 205 eines Beschleunigungssensorsignals des Beschleunigungssensors 140 aufweisen. Die Kalibrierung 205 erfolgt im Stillstand des Elektrofahrrads 100. Zur Kalibrierung wird ein Beschleunigungs-Offset OS in Richtung der Längsachse 170 des Fahrzeugs 100 in Abhängigkeit einer mittels des Beschleunigungssensors 140 erfassten Beschleunigung a bestimmt. Anschließend erfolgt während einer vorgegebenen Zeitspanne t eine Erfassung 210 der Drehzahl n des Antriebsrades 160 des Elektrofahrrads 100. Alternativ zur Erfassung 210 der Drehzahl n kann in dem Schritt 210 die Anzahl an Umdrehungen k erfasst werden. Gleichzeitig wird während der vorgegebenen Zeitspanne t die Beschleunigung a des Elektrofahrrads 100 in Längsrichtung des Elektrofahrrads 100 erfasst. Die Beschleunigung a kann während der vorgegebenen Zeitspanne t variieren, das heißt einen Beschleunigungsverlauf aufweisen. Die vorgegebene Zeitspanne ist beispielsweise eine Zeitdauer zwischen 0,1 Sekunden und 5 Minuten. Danach wird eine mit dem Elektrofahrrad 100 gefahrene Strecke s in Abhängigkeit der während der vorgegebenen Zeitspanne t erfassten Beschleunigung ermittelt. Die Ermittlung 240 der gefahrenen Strecke s erfolgt insbesondere durch zweifaches Integrieren der erfassten Beschleunigung a beziehungsweise des Beschleunigungsverlaufs beziehungsweise ein Summieren der Beschleunigungswerte während der vorgegebenen Zeitspanne t gemäß Formel 1.

$$s = \int_{t_0}^{t_1}\int_{t_0}^{t_1} a(t) \cdot t \; dt^2 \approx \sum_{t_0}^{t_1}\sum_{t_0}^{t_1} a_n \cdot t_n \qquad \text{(Formel 1)}$$

Abschließend erfolgt eine Bestimmung 250 des Radumfangs U in Abhängigkeit der während der vorgegebenen Zeitspanne t erfassten Umdrehungen k und der gefahrenen Strecke s, wobei die Anzahl an Umdrehungen k erfasst oder aus der Drehzahl n ermittelt wird. Die Bestimmung 250 des Radumfangs U erfolgt insbesondere gemäß Formel 2.

$$U = \frac{s}{k} \qquad \text{(Formel 2)}$$

Der bestimmte Radumfang U kann beispielsweise nach der Bestimmung 250 in einem elektrischen Speicher des Steuergeräts 150 gespeichert werden.

Anschließend wird optional beispielsweise eine Geschwindigkeit v des Elektrofahrrads 100 in Abhängigkeit der Drehzahl n des Antriebsrads 160 und des gespeicherten Radumfangs U ermittelt. Da der gespeicherte Radumfang U dem bestimmten beziehungsweise tatsächlichen Radumfang U des Elektrofahrrads 100 entspricht, ist die ermittelte Geschwindigkeit v des Elektrofahrrads 100 sehr genau. In einem anschließenden optionalen Schritt wird die ermittelte Geschwindigkeit v dem Radfahrer des Elektrofahrrads beispielsweise auf einem Display des Steuergeräts 150 als Tachofunktion angezeigt.

In Figur 2b ist ein Ablaufdiagramm des Steuerungsverfahrens für den Antriebsmotor 120 dargestellt. Das Steuerungsverfahren für den Antriebsmotor 120 beginnt mit der Erfassung 270 eines Radumfangs U. Der Radumfang U wird insbesondere aus einem elektrischen Speicher des Steuergeräts 150 erfasst, wobei der Radumfang U insbesondere gemäß des in Figur 2a beschriebenen Verfahrens zur Ermittlung des Radumfangs U des Antriebsrades 160 des Fahrzeugs bestimmt wurde. Anschließend erfolgt eine Ansteuerung 280 des Antriebsmotors 120 in Abhängigkeit des erfassten Radumfangs U.

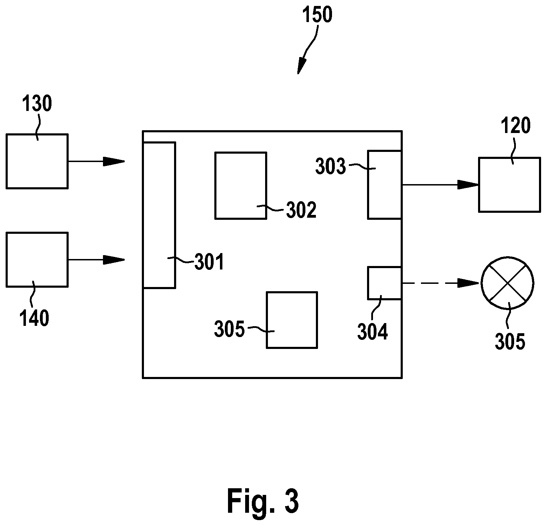

In Figur 3 ist ein Blockschaltbild des Steuergeräts 150 zur Durchführung eines der erfindungsgemäßen Verfahren gezeigt. Das Steuergerät 150 weist mindestens eine Eingangssignal-Schnittstelle 301, eine Recheneinheit 302, einen elektrischen Speicher 305, eine Ausgangssignal-Schnittstelle 303 und eine Display-Anschlussbuchse 304 auf. Das Steuergerät 150 erfasst während einer vorgegebenen Zeitspanne t beziehungsweise während einer Zeitdauer zwischen dem Startzeitpunkt $t_0$ und dem Endzeitpunkt $t_1$ mittels des Drehzahlsensors 130 die Drehzahl n des Antriebsrads 160. Das Steuergerät 150 ist mit dem Drehzahlsensor 130 insbesondere durch die Eingangssignal-Schnittstelle 301 verbunden. Das Steuergerät 150 erfasst des Weiteren gleichzeitig während der vorgegebenen Zeitspanne t mittels des Beschleunigungssensors 140 die Beschleunigung a des Elektrofahrrads 100 in Längsrichtung 170 des Elektrofahrrads 100. Der Beschleunigungssensor 140 kann in dem Steuergerät 150 angeordnet sein. Alternativ oder optional kann das Steuergerät 150 mit dem Beschleunigungssensor 140 insbesondere durch die Eingangssignal-Schnittstelle 301 oder eine zweite Eingangssignal-Schnittstelle 301 verbunden sein. Die Recheneinheit 302 ermittelt beispielsweise gemäß Formel 1 die während der vorgegebenen Zeitspanne t gefahrene Strecke s des Elektrofahrrads. Anschließend bestimmt die Recheneinheit 302 den Radumfang U des Antriebsrades 160 in Abhängigkeit der gefahrenen Strecke s und der während der Zeitspanne t erfassten Drehzahl n. Der bestimmte Radumfang U wird insbesondere im elektrischen Speicher 305 gespeichert. Das Steuergerät 150 kann optional dazu eingerichtet sein, ein Ausgangssignal, insbesondere aus an der Ausgangssignal-Schnittstelle 303, zur Ansteuerung 280 des Antriebsmotors 120 in Abhängigkeit des Radumfangs U zu erzeugen. Des Weiteren ist das Steuergerät 150 optional dazu eingerichtet, einen Radumfang U oder Informationen, beispielsweise Tachofunktionen, welche in Abhängigkeit des Radumfangs U ermittelt werden, auf einer Anzeigevorrichtung 305, insbesondere einem Display des Steuergeräts 150, anzuzeigen. Die Anzeigevorrichtung ist beispielsweise mittels der Display-Anschlussbuchse 304 mit dem Steuergerät 150 verbunden.

**Patentansprüche**

1.   Verfahren zur Ermittlung eines Radumfangs (U) eines Antriebsrads (160) eines Elektrofahrrads (100), wobei vor einer vorgegebenen Zeitspanne (t) folgender Schritt durchgeführt wird,

• Kalibrierung (205) eines Beschleunigungssensorsignals, wobei die Kalibrierung (205) im Stillstand des Elektrofahrrads (100) durchgeführt wird und zur Kalibrierung ein Beschleunigungs-Offset (OS) in Richtung der Längsachse (170) des Elektrofahrrads (100) in Abhängigkeit einer erfassten Beschleunigung (a) bestimmt wird, wobei

während einer vorgegebenen Zeitspanne (t) die folgenden Schritte durchgeführt werden

• Erfassung (210) einer Drehzahl (n) des Antriebsrads (160),
• Erfassung (220) eines Verlaufs einer Beschleunigung (a) des Elektrofahrrads (100) in Richtung der Längsachse (170) des Elektrofahrrads (100),

wobei anschließend folgende Schritte durchgeführt werden

• Ermittlung (240) einer gefahrenen Strecke (s) des Elektrofahrrads (100) in Abhängigkeit des während der Zeitspanne (t) erfassten Verlaufs der Beschleunigung (a),
• Bestimmung (250) des Radumfangs (U) des Antriebsrads (160) in Abhängigkeit der erfassten Drehzahl (n) und der ermittelten Strecke (s), und
• Ansteuerung (280) des Antriebsmotors (120) in Abhängigkeit des bestimmten Radumfangs (U).

2. Steuergerät (150) für ein Elektrofahrrad (100), wobei eine Recheneinheit (302) des Steuergeräts (150) dazu eingerichtet ist,

• vor einer vorgegebenen Zeitspanne (t) im Stillstand des Elektrofahrrads (100) eine Kalibrierung (205) eines Beschleunigungssensorsignals des Beschleunigungssensors (140) durchzuführen, wobei durch die Kalibrierung (205) ein Beschleunigungs-Offset (OS) in Richtung der Längsachse (170) des Elektrofahrrads (100) in Abhängigkeit der erfassten Beschleunigung (a) bestimmt wird,

wobei das Steuergerät (150) während der vorgegebenen Zeitspanne (t)

• mittels eines Drehzahlsensors (130) eine Drehzahl (n) eines Antriebsrads (160) des Elektrofahrrads (100) erfasst,
• mittels eines Beschleunigungssensors (140) eine Beschleunigung (a) des Elektrofahrrads (100) in Richtung der Längsachse (170) des Elektrofahrrads (100) erfasst, und
• wobei die Recheneinheit (302) dazu eingerichtet ist, die während der Zeitspanne (t) gefahrene Strecke (s) des Elektrofahrrads (100) in Abhängigkeit der erfassten Beschleunigung (a) und in Abhängigkeit des bestimmten Beschleunigung-Offsets (OS) zu ermitteln,

wobei

• das Steuergerät (150) mittels der Recheneinheit (302) dazu eingerichtet ist, einen Radumfang (U) des Antriebsrads (160) des Elektrofahrrads (100) in Abhängigkeit der erfassten Drehzahl (n) und der ermittelten Strecke (s) zu bestimmen, wobei
• das Steuergerät (150) dazu eingerichtet ist, ein Ausgangssignal zur Ansteuerung eines Antriebsmotors (120) des Elektrofahrrads (100) in Abhängigkeit des bestimmten Radumfangs (U) zu erzeugen.

3. Elektrofahrrad (100) mit einem Steuergerät (150) nach Anspruch 2.


**Claims**

1. Method for determining a wheel circumference (U) of a drive wheel (160) of an electric bicycle (100), wherein the following step is carried out before a predefined time period (t),

• calibrating (205) an acceleration sensor signal, wherein the calibration (205) takes place in the stationary stage of the electric bicycle (100), and for the calibration an acceleration offset (OS) in the direction of the longitudinal axis (170) of the electric bicycle (100) is determined as a function of a sensed acceleration (a), wherein

the following steps are carried out during a predefined time period (t)

• sensing (210) a rotational speed (n) of the drive wheel (160)
• sensing (220) a profile of an acceleration (a) of the electric bicycle (100) in the direction of the longitudinal axis (170) of the electric bicycle (100),

wherein the subsequent following steps are carried out

• determining (240) a distance (s) travelled along by the electric bicycle (100) as a function of the profile of the acceleration (a) which is sensed during the time period (t),
• determining (250) the wheel circumference (U) of the drive wheel (160) as a function of the sensed rotational speed (n) and the determined distance (s), and
• actuating (280) the drive motor (120) as a function of the determined wheel circumference (U) .

2. Control unit (150) for an electric bicycle (100), wherein a computing unit (302) of the control unit (150) is configured

• to carry out calibration (205) of an acceleration sensor signal of the acceleration sensor (140) before a predefined time period (t) in the stationary state of the electric bicycle (100), wherein by means of the calibration (205) an acceleration offset (OS) in the direction of the longitudinal axis (170) of the electric bicycle (100) is determined as a function of the sensed acceleration (a),

wherein the control unit (150) senses, during a predefined time period (t),

• a rotational speed (n) of a drive wheel (160) of the electric bicycle (100) by means of a rotation speed sensor (130),
• senses an acceleration (a) of the electric bicycle (100) in the direction of the longitudinal axis (170) of the electric bicycle (100) by means of an acceleration sensor (140), and
• wherein the computing unit (302) is configured to determine the distance (s) travelled along by the electric bicycle (100) during the time period (t) as a function of the sensed acceleration (a) and as a function of the determined acceleration offset (OS),

wherein

• the control unit (150) is configured by means of the computing unit (302) to determine a wheel circumference (U) of the drive wheel (160) of the electric bicycle (100) as a function of the sensed rotational speed (n) and the determined distance (s), wherein
• the control unit (150) is configured to generate an output signal for actuating a drive motor (120) of the electric bicycle (100) as a function of the determined wheel circumference (U).

3. Electric bicycle (100) having a control unit (150) according to Claim 2.

**Revendications**

1. Procédé de détermination d'une circonférence de roue (U) d'une roue d'entraînement (160) d'une bicyclette électrique (100), dans lequel l'étape suivante est réalisée avant une période de temps (t) prédéterminée,

• étalonnage (205) d'un signal de capteur d'accélération, dans lequel l'étalonnage (205) est réalisé lorsque le vélo électrique (100) est à l'arrêt, et en vue de l'étalonnage, un décalage d'accélération (OS) dans la direction de l'axe longitudinal (170) du vélo électrique (100) est déterminé en fonction d'une accélération (a) détectée, dans lequel,

pendant une période de temps (t) prédéterminée, les étapes suivantes sont exécutées

• détection (210) d'une vitesse (n) de la roue d'entraînement (160),
• détection (220) d'une courbe de l'accélération (a) du vélo électrique (100) dans la direction de l'axe longitudinal (170) du vélo électrique (100), dans lequel les étapes suivantes sont ensuite réalisées
• détermination (240) d'une distance parcourue (s) du vélo électrique (100) en fonction de la courbe d'accélération (a) détectée pendant la période de temps (t),
• détermination (250) de la circonférence de roue (U) de la roue d'entraînement (160) en fonction de la vitesse de rotation (n) détectée et de la distance (s) déterminée, et
• commande (280) du moteur d'entraînement (120) en fonction de la circonférence de roue (U) déterminée.

2. Appareil de commande (150) destiné à un vélo électrique (100), dans lequel une unité de calcul (302) de l'appareil de commande (150) est conçue pour

• réaliser un étalonnage (205) d'un signal du capteur d'accélération (140) avant une période de temps (t) prédéterminée alors que le vélo électrique (100) est à l'arrêt, dans lequel un décalage d'accélération (OS) dans la direction de l'axe longitudinal (170) du vélo électrique (100) est déterminé par l'étalonnage (205) en fonction de l'accélération (a) détectée,

dans lequel, pendant la période de temps (t) prédéterminée, l'appareil de commande (150)

• détecte une vitesse de rotation (n) d'une roue d'entraînement (160) du vélo électrique (100) au moyen d'un capteur de vitesse de rotation (130),
• détecte une accélération (a) du vélo électrique (100) dans la direction de l'axe longitudinal (170) du vélo électrique (100) au moyen d'un capteur d'accélération (140), et
• dans lequel l'unité de calcul (302) est conçue pour déterminer la distance (s) parcourue par le vélo électrique (100) pendant la période de temps (t) en fonction de l'accélération (a) détectée et en fonction du décalage d'accélération (OS) déterminé,

dans lequel

• l'appareil de commande (150) est conçu pour déterminer, au moyen de l'unité de calcul (302), une circonférence de roue (U) de la roue d'entraînement (160) du vélo électrique (100) en fonction de la vitesse (n) détectée et de la distance (s) déterminée, dans lequel
• l'appareil de commande (150) est conçu pour générer un signal de sortie destiné à commander un moteur d'entraînement (120) du vélo électrique (100) en fonction de la circonférence de roue (U) déterminée.

3. Vélo électrique (100) comportant un appareil de commande (150) selon la revendication 2.

**Fig. 1**

**Fig. 2a**

**Fig. 2b**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012201881 A1
- EP 1213561 A1
- DE 102010000867 A1